# EUROPÄISCHE PATENTSCHRIFT

(11) **EP 2 001 622 B1**
(45) Veröffentlichungstag und Bekanntmachung des Hinweises auf die Patenterteilung: **27.06.2012**
(21) Anmeldenummer: 07722156.2
(22) Anmeldetag: 03.04.2007
(51) Int. Cl.: B23B 5/18, B23C 3/06, B23B 27/14, B23D 37/00

(54) **Schneideinsatz und Verfahren zur spanenden Bearbeitung von rotierend bewegten Werkstücken**
Cutting insert and method for the cutting machining of rotating workpieces
Insert de coupe et procédé pour l'usinage par enlèvement de copeaux de pièces entraînées en rotation

(30) Priorität: 06.04.2006 DE 102006016626
(43) Veröffentlichungstag der Anmeldung: 17.12.2008
(73) Patentinhaber: Kennametal Widia Produktions GmbH & Co. KG, 45145 Essen (DE)
(72) Erfinder: SERWUSCHOK, Klaus, 91722 Arberg (DE)
(74) Vertreter: Vomberg, Friedhelm
(86) Internationale Anmeldenummer: PCT/DE2007/000598
(87) Internationale Veröffentlichungsnummer: WO 2007/112734

(56) Entgegenhaltungen:
- EP-A1- 1 087 853
- DE-C3- 4 135 681
- JP-A- 7 314 205
- US-A- 4 794 665
- US-A- 4 867 616

## Beschreibung

Die Erfindung betrifft einen Schneideinsatz gemäß dem Oberbegriff des Anspruchs 1 zur spanenden Bearbeitung von rotierend bewegten Werkstücken, nämlich Kurbelwellen, mit einer prismatischen Grundform, der eine obere und eine untere Fläche aufweist, die parallel zueinander angeordnet sind und die durch vier senkrecht hierzu angeordnete Seitenflächen verbunden sind, von denen zwei gegenüberliegende Seitenflächen vorspringende und rückspringende Abschnitte aufweisen, die zusammen mit der oberen und der unteren Fläche jeweils Schneidkanten bilden, und von denen die beiden anderen gegenüberliegenden Seitenflächen eben und parallel zueinander angeordnet sind, wobei nebeneinander liegende vorspringende Abschnitte Hauptschneiden bilden, die auf einer Linie liegen.

Die Erfindung betrifft ferner ein Verfahren gemäß dem Oberbegriff des Anspruchs 7 zur spanenden Bearbeitung von rotierend bewegten Werkstücken, insbesondere von Kurbelwellen, wobei mindestens ein Schneideinsatz zunächst in radialer Richtung auf das Werkstück zugestellt und anschließend in axialer Richtung relativ zu dem Werkstück bewegt wird.

Ein solcher Schneideinsatz und ein solches Verfahren sind beispielsweise aus der EP 1 087 853 B2 bekannt.

Bereits der DE 41 35 681 C3 ist ein Verfahren zur spanenden Bearbeitung rotationssymmetrischer Werkstückflächen, insbesondere von Kurbelwellen, zu entnehmen, bei dem die Werkstückfläche bei der Bearbeitung rotiert und zunächst mittels Schneidplatten grob bearbeitet und anschließend mittels mindestens einer weiteren Schneidplatte beschlichtet wird, wobei die zu bearbeitende Werkstückfläche bei der Schlichtbearbeitung durch die weitere in Achsrichtung der Werkstückfläche bewegte Schneidplatte im Längsdrehverfahren bearbeitet wird. Das die weitere Schneidplatte tragende Werkzeug wird bei der Schlichtbearbeitung radial zur Werkstückfläche zugestellt, wobei das Längsdrehen mittels wenigstens zweier axial mit Abstand nebeneinander liegender, im Wesentlichen gleichzeitig arbeitender Schneiden der weiteren Schneidplatte erfolgt. Das hierzu verwendete Werkzeug besitzt einen Werkzeuggrundkörper, auf dem mindestens eine Schneidplatte für die Grobbearbeitung und mindestens eine weitere Schneidplatte für die Schlichtbearbeitung angeordnet sein soll. Die genannte weitere Schlichtplätte besitzt für die Längsdreh-Schlichtbearbeitung wenigstens zwei axial mit Abstand nebeneinander liegende Schneiden, insbesondere eine Schneidkante mit einem zahnartigen Profil, bei dem eine Vielzahl von mit Abstand nebeneinander liegenden Schneiden jeweils eine Dreieckform haben. Die durch diese dreieckförmigen Schneiden gebildeten Spitzen liegen in einer Ebene.

Der DE 41 35 681 C3 ist zu entnehmen, dass ein Werkzeug mit in Umfangsrichtung hintereinander liegenden Schneidplatten versehen ist, mit denen an einer Kurbelwelle unterschiedliche Bearbeitungen vorgenommen werden können. Mit einem ersten Satz von beispielsweise vier Schneidplatten erfolgt eine Schruppbearbeitung, bei der im angegebenen Beispiel in der Draufsicht auf die Spanfläche viereckige Schneideinsätze radial in Richtung auf eine Kurbelwelle zugestellt werden. Nachdem im Einstechdrehverfahren die Kurbelwelle soweit spanend bearbeitet worden ist, dass sich annähernd eine Zapfenumfangsfläche mit seitlichen Ölbunden ausgebildet hat, wird zum Schlichten eine Schneidplatte mit mehreren dreieckförmigen Schneidkanten auf das Werkstück zugestellt und längsaxial zum Längsdrehen bewegt.

Auch aus der US 4,867,616 ist ein Schneideinsatz bekannt, der eine prismenartige Grundform aufweist. Dieser Schneideinsatz hat zwei im Wesentlichen parallele, obere und untere Flächen sowie mindestens drei Seitenflächen, die zu den oberen und unteren Flächen im Wesentlichen senkrecht verlaufen. An der Schnittstelle mindestens einer Seitenfläche zu der oberen oder unteren Fläche ist eine Schneidkante ausgebildet. Die betreffende Seitenfläche ist nicht eben und weist abwechselnd angeordnete vorstehende und rückstehende Abschnitte auf, womit wirksame Abschnitte von Hauptschneidkanten mindestens im Bereich der vorstehenden Abschnitte ausgebildet sind. Zwischen diesen Hauptschneidkanten erstrecken sich schräg liegende Nebenschneidkanten, die gegenüber den Hauptschneidkanten teilweise um 60° und in den Eckenbereichen um 45° abgewinkelt sind. Weiterhin werden die Spanflächen durch jeden Abschnitt einer Hauptschneidkante individuell zugeordnete Vertiefungen gebildet, wobei sich im mittleren Bereich einer Hauptschneidkante ein Winkel zwischen der Spanfläche und der Hauptfreifläche im Bereich von 62° bis 72° ergibt.

Diese Schneideinsätze sollen so auf einem Fräswerkzeug montiert werden, dass ihre Hauptschneidkanten geringfügig überlappen und wechselseitig die Hauptschneidkanten eines Schneideinsatzes die rückspringenden Bereiche eines nächstfolgenden Schneideinsatzes abdecken, so dass die Nebenschneidkanten nur mit ihren unmittelbar an die Hauptschneiden angrenzenden Bereichen mit dem Werkstück in Eingriff kommen können. Ein entsprechendes Werkzeug ist ausschließlich für die Zustellung in radialer Richtung vorgesehen, um z. B. Nuten oder dergleichen in ein Werkstück einzufräsen.

In der EP 1 087 853 B2 wird die Aufgabe gestellt, ein Verfahren zur Bearbeitung von Werkstücken zu schaffen, bei dem der Schneideinsatz bei der Bearbeitung von Werkstücken nicht nur radial, sondern auch in axialer Richtung zugestellt werden soll, wobei die entsprechenden Werkstückflächen rationell und in guter Qualität, d. h. mit geringen Toleranzen hergestellt werden sollen.

Nach dem dort beschriebenen Verfahren soll zur Herstellung rotationssymmetrischer Oberflächen mindestens ein Schneideinsatz der eingangs genannten Art verwendet werden. Insbesondere soll dieser Schneideinsatz durch bestimmte Winkel charakterisiert sein, nämlich einem ersten Winkel, der zwischen den Spanflächen und der Ebene der Hauptfreiflächen gebildet wird, welche durch die an die Hauptschneidkante angrenzende Bereiche der Seitenfläche definiert ist und der zwischen 72° und 76° liegen soll, ferner einen Winkel zwischen 75° und 70° zwischen den Nebenschneidkanten und der Hauptschneidkante und einem Neigungswinkel des Schneideinsatzes, bei dem ein effektiver Freiwinkel von 8° bis 12° gebildet wird. Hervorgehoben wird, dass die Auswahl solcher Winkel zum einen eine positive Schneidengeometrie sowohl während der radialen als auch während der axialen Zustellung zum Werkstück ermöglicht, worüber hinaus auch auftretende Reaktionskräfte relativ gering gehalten werden könnten. Auch dieses Werkzeug ist lediglich zur Feinbearbeitung geeignet.

Bei allen nach dem Stand der Technik bekannten Verfahren besteht somit der Nachteil, dass zunächst zur Fertigung des Lagers einer Kurbelwelle mit einem ersten Schneideinsatz eine Grobbearbeitung vorgenommen wird. Hierzu wird vielfach eine sogenannte Dreikantwendeschneidplatte mit einem Eckenradius von 1,2 mm verwendet. Anschließend wird zur Feinbearbeitung einer der vorbeschriebenen Schneideinsätze mit einer kammartigen Schneidkante verwendet, mit der die Endkontur des Lagergrundes im Längsdrehverfahren bearbeitet wird. Um eine Kurbelwelle fertigen zu können, müssen somit eine bestimmte Anzahl von Schneideinsätzen mit unterschiedlichen Geometrien und in unterschiedlichen Sorten in Vorrat gehalten werden. Die Zahl der verschiedenen Arten der Wendeschneidplattenvarianten ist nicht unerheblich, was nachteiliger Weise eine Verwechselungsgefahr bei der Montage mit kostenträchtiger Fehlfunktion der montierten Werkzeuge zur Folge haben kann. Durch die Vielzahl der benötigten Schneideinsätze entstehen auch hohe Rüstzeiten.

Letztendlich haben die Werkzeugkosten einen wesentlichen Einfluss auf die Herstellungskosten der zu bearbeitenden Werkstücke.

Es ist Aufgabe der vorliegenden Erfindung, die vorstehend erwähnten Nachteile zu vermeiden, insbesondere einen Schneideinsatz zu schaffen, mit dem die Bearbeitung von rotierend bewegten Werkstücken, wie Kurbel- oder Nockenwellen, effektiver gestaltet werden kann. Entsprechendes gilt hinsichtlich der Schaffung eines Verfahrens zur spanenden Bearbeitung solcher Werkstücke.

Diese Aufgabe wird durch den Schneideinsatz nach Anspruch 1 bzw. das Verfahren nach Anspruch 7 gelöst.

Erfindungsgemäß besitzt der Schneideinsatz eine obere und eine untere Fläche, die zueinander parallel angeordnet sind sowie vier senkrecht hierzu angeordnete Seitenflächen, von denen zwei gegenüberliegende Seitenflächen vorspringende und rückspringende Abschnitte aufweisen und von denen die beiden anderen gegenüberliegenden Seitenflächen eben und parallel zueinander angeordnet sind. Mindestens eine durch zwei aneinander grenzende Seitenflächen gebildete Schneidecke ist als runde Schneidkante ausgebildet. An die nach dem Stand der Technik bekannte kammartige Schneidkante schließt sich zu einer Seite eine Eckenschneide an, die dazu geeignet ist, beim Einstechen das Mittellager in einem ersten Arbeitsgang plan zu drehen, wonach durch längsaxiale Verschiebung im Längsdrehen die kammartige Schneidkante ausgenutzt wird. Eine solche Ausbildung lässt die bisher verwendeten Schneideinsätze mit dreieckiger oder viereckiger Spanfläche in einer Draufsicht, die im ersten Arbeitsgang zum Einsatz kamen, vollständig entfallen. Durch den neuen Schneideinsatz wird somit ein Kombinationswerkzeug geschaffen, dass nicht nur Kostenvorteile bietet, da erheblich weniger Wendeschneidplatten für die Kurbelwellenbearbeitung benötigt werden, sondern auch Lagerkapazität einsparen lässt. Durch Verwendung dieser Kombinationswerkzeuge sinkt auch die Verwechselungsgefahr im Sinne einer Fehlmontage. Schließlich sind die Rüstzeiten geringer, da anstelle von bisher jeweils zwei Wendeschneidplatten nur eine Wendeschneidplatte montiert werden muss.

Schließlich wird die Effektivität der Bearbeitung erhöht, indem die verschiedenen Kassettenvarianten der bisher eingesetzten unterschiedlichen Schneideinsätze für die Grob- und Feinbearbeitung durch einen Kassettentyp mit der erfindungsgemäßen Schneidplatte ersetzt werden. Durch die Halbierung der benötigten Kassetten ergeben sich somit ebenfalls Kostenvorteile. Letztendlich lässt sich die Bearbeitungszeit innerhalb einer Prozesslinie verkürzen, da die Schwenkzeit zwischen der Kassette mit einer ersten Wendeschneidplatte und der Kassette mit der Kamm-Wendeschneidplatte eingespart wird.

Weitere Ausführungsformen sowie Vorteile ergeben sich aus den Unteransprüchen.

So besitzt die erfindungsgemäße runde Schneidecke einen Eckenradius zwischen 0,3 mm und 0,5 mm, vorzugsweise von 0,4 mm. Eine weitere Optimierung im Sinne einer Wendeschneidplatte wird dadurch erzielt, dass jeweils zwei diametral gegenüberliegende Schneidecken auf der oberen und der unteren Fläche angeordnet sind, d. h. pro Schneideinsatz vier Schneidecken mit vier sich hier anschließenden kammartigen Schneidkanten. Vorzugsweise begrenzen die Schneidecken einen im Wesentlichen halbzylinderförmigen Abschnitt an den Seitenflächen. Hinsichtlich der kammförmigen Schneidkante, die grundsätzlich aus dem Stand der Technik bekannt ist, kann auf die aus der DE 41 35 6841 C3 oder der EP 0 542 026 B1 bekannte Ausführungsform oder die Ausführungsform nach EP 1 087 853 B2 zurückgegriffen werden. Vorzugsweise sind jedoch die vorspringenden und rückspringenden Abschnitte in einer Draufsicht betrachtet trapezförmig ausgebildet, insbesondere bilden die nebeneinander liegenden vorspringenden Abschnitte Hauptschneiden, die auf einer Linie liegen und die jeweils seitlich in Nebenschneiden übergehen, die mit den Hauptschneiden einen Winkel von 120° bis 160° einschließen. Erfindungsgemäß berührt eine an die durch vorspringende Abschnitte gebildete Schneidkante angelegte Tangente die Schneidecke in nur einem Punkt.

Nach einer weiteren Ausgestaltung der Erfindung ist die an die Schneidecke sowie an die vorspringenden und rückspringenden Abschnitte angrenzende Spanfläche unter einem positiven Spanwinkel geneigt, der vorzugsweise zwischen 10° und 20° liegt. Zudem wird die obere und untere Fläche mit einem erhaben ausgebildeten Mittelplateaubereich versehen, an den sich eine konkav ausgebildete Flanke als Übergangsbereich zur Spanfläche anschließt. Dieses Mittelplateau dient dazu, zusammen mit den zwei sich gegenüberliegenden Seitenflächen eine sichere Einspannung des Schneideinsatzes in einem Schneideinsatzhalter zu gewährleisten. Der Übergangsbereich dient dazu, die über die Spanfläche ablaufenden Späne derart "aufzubiegen", dass es zu einem raschen Spanbruch kommt, womit lange Wirr-Späne vermieden werden.

Erfindungsgemäß wird der vorbeschriebene Schneideinsatz zur spanenden Bearbeitung von rotierend bewegten Werkstücken, insbesondere von Kurbelwellen eingesetzt, wobei mindestens ein Schneideinsatz zunächst in radialer Richtung auf das Werkstück zugestellt und anschließend in axialer Richtung relativ zu dem Werkstück bewegt wird. Dieser Schneideinsatz führt bei der Einstechbewegung ein Plandrehen eines Mittellagers mit anschließend zur Fertigbearbeitung im Wege einer axialen Bewegung eine Glättbearbeitung eines zylinderförmigen Zapfens aus.

Weitere Details der Erfindung ergeben sich aus den Zeichnungen. Es zeigen:
- Fig. 1: eine perspektivische Ansicht des erfindungsgemäßen Schneideinsatzes und
- Fig. 2+3: jeweils Skizzen über unterschiedliche Bearbeitungsfolgen, die nach dem Stand der Technik oder mit dem erfindungsgemäßen Schneideinsatz möglich sind.

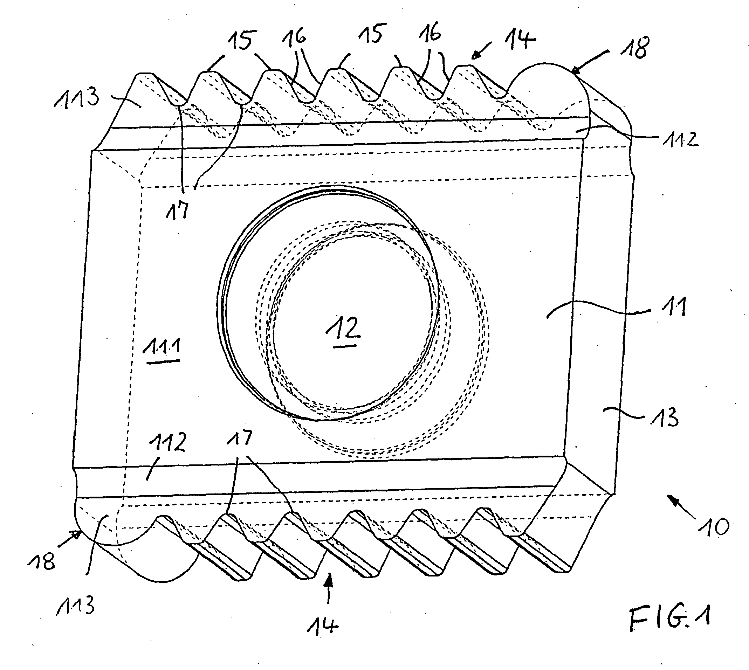

Fig. 1 zeigt den erfindungsgemäßen Schneideinsatz 10, der eine obere Fläche 11 sowie eine dieser oberen Fläche gegenüberliegende Fläche aufweist. Diese Flächen sind zumindest im Wesentlichen parallel, wobei jeweils auf beiden Seiten ein Mittelplateau 111 eine konkav abfallende Flanke 112 sowie eine Spanfläche 113 beidseits des mittleren Plateaus 111 gebildet werden. Die Flächen 11 sind von einem Loch 12 zur Aufnahme einer Befestigungsschraube durchdrungen. Die obere und die untere Flächen 11 werden durch vier senkrecht hierzu stehende Seitenflächen miteinander verbunden, wobei die sich gegenüberliegende Seitenflächen 13, die parallel zueinander angeordnet sind sowie die mit Vorsprüngen und Rücksprüngen ausgebildeten gegenüberliegenden Flächen 14 die obere und untere Fläche 11 miteinander verbinden. Das kammartige Profil, das grundsätzlich nach dem Stand der Technik bekannt ist, besteht aus trapezförmigen Vorsprüngen, die in einer Linie liegende Hauptschneidkanten 15 aufweisen, welche beidseitig von Nebenschneidenkanten 16 flankiert werden, die zu einem ebenfalls ebenen Grund 17 auslaufen. Das Trapezprofil wiederholt sich im vorliegenden Fall sechsfach, wobei alle Hauptschneidkanten 15 ebenso auf eine Linie liegen, die auch gleichzeitig eine Tangente an die Schneidecke 18 bildet. Diese Schneidecke 18 ist über die gesamte Seitenfläche 14 als im Wesentlichen halbzylinderförmiger Körper ausgebildet, wobei der Schneideckenradius 0,4 mm beträgt. Solche Schneidecken 18 sind auf jeder Seite diametral gegenüberliegend ausgebildet, so dass vier nutzbare kammprofilartige Schneiden und vier Schneidecken gebildet werden.

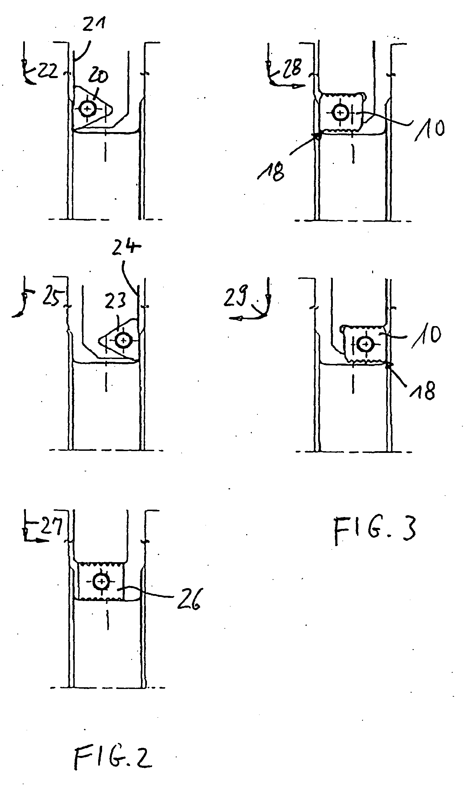

Die Vorteile der vorliegenden Erfindung werden anhand der Figuren 2 und 3 deutlich. In Fig. 2 sind die Bearbeitungsschritte dargestellt, die zur Fertigung eines Mittellagers einer Kurbelwelle erforderlich sind. Hierzu wird in einem ersten Schritt nach Fig. 2 eine in der Draufsicht dreieckförmige Wendeschneidplatte 20 verwendet, die einen Eckenradius von beispielsweise 1,2 mm besitzt und mit der eine im Bild links dargestellte Wange 21 plangedreht wird. Nach der Einstechbewegung, bei der das Werkzeug 20 radial auf das Werkstück zugeführt wird (in der Zeichnung von oben nach unten) wird das Werkzeug 20 anschließend gemäß dem gekrümmten Teil 22 nach rechts geführt und längsdrehend entlang einer Zapfenoberfläche geführt. Hiernach wird das Werkzeug 20 ausgeschwenkt und ein weiteres Werkzeug 23 derselben Kontur zur Bearbeitung und Fertigung einer Wange 24 eingeführt. Die Bewegung aus einem radial Einstechen sowie einem Einschwenken ist durch Pfeil 25 schematisch deutlich gemacht. Auf diese Weise wird zunächst eine Grobbearbeitung vorgenommen, wonach ein Werkzeug 26 mit einer kammartigen Schneidkante, die kürzer als die längsaxiale Erstreckung des Lagergrundes ist, eingeführt und anschließend wie durch Pfeile 27 ersichtlich zum längsaxialen Drehen über den Lagergrund geführt wird. Deutlich verkürzte Bearbeitungszeiten ergeben sich hingegen wenn gemäß Fig. 3 mit einem erfindungsgemäßen Werkzeug 10 gearbeitet wird, das die Werkzeuge 20 bzw. 23 und 26 kombiniert. Der Schneideinsatz 10 wird in der in Fig. 3 dargestellten Weise zunächst radial zugestellt, wobei die Schneidecke 18 zum Plandrehen eines Mittellagers verwendet wird. Durch anschließendes Einschwenken, wie durch die Pfeilfolge 28 ersichtlich, wird das Werkzeug über den Lagergrund geführt, womit dieser etwa bis zur Hälfte fertig bearbeitet wird. Anschließend wird ein weiteres Werkzeug 10 in derselben Weise radial zugestellt und nach Fertigung des plangedrehten Mittellagers gemäß der Pfeilfolge 29 längsaxial über den Lagergrund geführt, so dass sich insgesamt eine vollständig bearbeitete Lagerfläche ergibt. Mit dem Schneideinsatz 10 können somit zwei kombinierte Bewegungen vorgenommen werden, welche die bisher notwendigen Werkzeuge 20 bzw. 23 und 26 ersetzen. Dies vereinfacht die Lagerhaltung und verkürzt die Bearbeitungszeit.

Der Schneideinsatz 10 ist für die Bearbeitung von Nicht-Eisenmetallen, Eisen und Guss, insbesondere für Kurbelwellenbearbeitung geeignet. Der Schneideinsatz 10 kann aus einem unbeschichteten Hartmetall oder Cermet oder entsprechend beschichteten Werkstoffen je nach Werkstück und Bearbeitungsparametern bestehen.

## Patentansprüche

1. Schneideinsatz zur spanenden Bearbeitung von rotierend bewegten Werkstücken, nämlich Kurbelwellen, mit einer prismatischen Grundform, der eine obere und eine untere Fläche (11) aufweist, die parallel zueinander angeordnet sind und die durch vier senkrecht hierzu angeordnete Seitenflächen verbunden sind, von denen zwei gegenüberliegende Seitenflächen (14) vorspringende und rückspringende Abschnitte aufweisen, die zusammen mit der oberen und der unteren Fläche (11) jeweils Schneidkanten bilden, und von denen die beiden anderen gegenüberliegenden Seitenflächen (13) eben und parallel zueinander angeordnet sind, wobei nebeneinander liegende vorspringende Abschnitte Hauptschneiden bilden, die auf einer Linie liegen,
**dadurch gekennzeichnet, dass**
mindestens eine durch zwei aneinander grenzende Seitenflächen gebildete Schneidecke (18) als runde Schneidkante ausgebildet ist, die einen im Wesentlichen halbzylinderförmigen Abschnitt an den Seitenflächen begrenzen, und die geeignet sind, beim Einstechen ein Mittellager einer Kurbelwelle plan zu drehen, wobei eine an die durch vorspringende Abschnitte gebildete Schneidkante angelegte Tangente die Schneidecke (18) in einem Punkt tangential berührt.

2. Schneideinsatz nach Anspruch 1, **dadurch gekennzeichnet, dass** die Schneidecke (18) rund ist und einen Eckenradius von 0,3 mm bis 0,5 mm, vorzugsweise 0,4 mm besitzt.

3. Schneideinsatz nach einem der Ansprüche 1 oder 2, **gekennzeichnet durch** jeweils zwei diametral gegenüber liegende Schneidecken (18) auf der oberen und der unteren Fläche.

4. Schneideinsatz nach einem der Ansprüche 1 bis 3, **dadurch gekennzeichnet, dass** die vorspringenden und rückspringenden Abschnitte in einer Draufsicht betrachtet trapezförmig ausgebildet sind, wobei vorzugsweise die nebeneinander liegenden vorspringenden Abschnitte Hauptschneiden (15) bilden, die auf einer Linie liegen und die jeweils seitlich in Nebenschneiden (16) übergehen, die mit den Hauptschneiden (15) einen Winkel von 120° bis 160° einschließen.

5. Schneideinsatz nach einem der Ansprüche 1 bis 4, **dadurch gekennzeichnet, dass** die an die Schneidecke (18) sowie an die vorspringenden und rückspringenden Abschnitte angrenzende Spanfläche (113) unter einem positiven Spanwinkel geneigt ist, der vorzugsweise zwischen 10° und 20° liegt.

6. Schneideinsatz nach einem der Ansprüche 1 bis 5, **dadurch gekennzeichnet, dass** die obere und die untere Fläche (11) einen erhaben ausgebildeten Mittelplateaubereich (111) aufweisen, an den sich eine konkav ausgebildete Flanke (112) als Übergangsbereich zur Spanfläche (113) anschließt.

7. Verfahren zur spanenden Bearbeitung von rotierend bewegten Werkstücken, nämlich von Kurbelwellen, wobei mindestens ein Schneideinsatz zunächst in radialer Richtung auf das Werkstück zugestellt und anschließend in axialer Richtung relativ zu dem Werkstück bewegt wird,
**dadurch gekennzeichnet, dass**
ein Schneideinsatz (18) nach einem der Ansprüche 1 bis 6 zunächst zum Plandrehen eines Mittellagers radial und anschließend zur Fertigbearbeitung eines Lagergrundes axial bewegt wird.

## Claims

1. Cutting insert for machining rotated workpieces, namely crankshafts, which has a prismatic basic shape and has a top and a bottom surface (11) which are arranged parallel to one another and are connected by four side faces which are arranged perpendicularly thereto and of which two opposite side faces (14) have projecting and recessed sections, which together with the top and the bottom surface (11) form respective cutting edges, and of which the two other opposite side faces (13) are arranged in a planar manner and parallel to one another, wherein projecting sections lying next to one another form main cutting edges which lie in a line, **characterized in that** at least one cutting corner (18) formed by two side faces adjoining one another is designed as a round cutting edge, which cutting corner defines an essentially semicylindrical section on the side faces and which is suitable for the facing of the center bearing of a crankshaft during the recessing, wherein a tangent positioned at the cutting edge formed by the projecting sections touches the cutting corner (18) tangentially at one point.

2. Cutting insert according to Claim 1, **characterized in that** the cutting corner (18) is round and has a corner radius of 0.3 mm to 0.5 mm, preferably 0.4 mm.

3. Cutting insert according to either of Claims 1 and 2, **characterized by** two respective diametrically opposite cutting corners (18) on the top and the bottom surface.

4. Cutting insert according to one of Claims 1 to 3, **characterized in that** the projecting and recessed sections are of trapezoidal design as viewed in plan view, wherein the projecting sections lying next to one another preferably form main cutting edges (15) which lie in a line and which each merge laterally into secondary cutting edges (16) which enclose an angle of 120° to 160° with the main cutting edges (15).

5. Cutting insert according to one of Claims 1 to 4, **characterized in that** the rake face (113) adjoining the cutting corner (18) and the projecting and recessed sections is inclined at a positive rake angle which is preferably between 10° and 20°.

6. Cutting insert according to one of Claims 1 to 5, **characterized in that** the top and the bottom surface (11) have a center plateau region (111) of raised design, adjoining which is a concave flank (112) as transition region to the rake face (113).

7. Method of machining rotated workpieces, namely crankshafts, at least one cutting insert first of all being fed in onto the workpiece in the radial direction and then being moved relative to the workpiece in the axial direction, **characterized in that** a cutting insert (18) according to one of Claims 1 to 6 is first of all moved radially for facing a center bearing and is then moved axially for the finish machining of a bearing root.

## Revendications

1. Insert de coupe pour l'usinage par enlèvement de copeaux de pièces entraînées en rotation, à savoir de manivelles, comprenant une forme de base prismatique, qui présente une surface supérieure et une surface inférieure (11), lesquelles surfaces sont disposées parallèlement l'une à l'autre, et sont connectées par quatre faces latérales disposées perpendiculairement à celles-ci, dont deux surfaces latérales opposées (14) présentent des portions saillant vers l'avant et vers l'arrière, qui forment conjointement avec la surface supérieure et la surface inférieure (11) à chaque fois des arêtes de coupe, et dont les deux autres faces latérales opposées (13) sont disposées en plan et parallèlement l'une à l'autre, des portions saillant vers l'avant situées les unes à côté des autres formant des bords de coupe principaux qui sont alignés,
**caractérisé en ce**
**qu'**au moins un coin de coupe (18) formé par deux faces latérales adjacentes l'une à l'autre est réalisé sous forme d'arête de coupe arrondie, qui délimite une portion de forme essentiellement semi-cylindrique au niveau des faces latérales, et qui est appropriée, lors de la rectification, pour faire tourner en plan un palier central d'une manivelle, une tangente appliquée contre l'arête de coupe formée par des portions saillant vers l'avant venant en contact avec le coin de coupe (18) tangentiellement en un point.

2. Insert de coupe selon la revendication 1, **caractérisé en ce que** le coin de coupe (18) est arrondi et possède un rayon de coin de 0,3 mm à 0,5 mm, de préférence de 0,4 mm.

3. Insert de coupe selon l'une quelconque des revendications 1 ou 2, **caractérisé par** deux coins de coupe (18) diamétralement opposés sur la surface supérieure et sur la surface inférieure, respectivement.

4. Insert de coupe selon l'une quelconque des revendications 1 à 3, **caractérisé en ce que** les portions saillant vers l'avant et vers l'arrière, considérées en vue de dessus, sont réalisées sous forme trapézoïdale, les portions saillantes juxtaposées formant de préférence des bords de coupe principaux (15), qui sont alignés et se prolongent à chaque fois latéralement par des bords de coupe secondaires (16) qui forment avec les bords de coupe principaux (15) un angle de 120° à 160°.

5. Insert de coupe selon l'une quelconque des revendications 1 à 4, **caractérisé en ce que** la surface de coupe (113) adjacente au coin de coupe (18) ainsi qu'aux portions saillant vers l'avant et vers l'arrière est inclinée suivant un angle de coupe positif qui est de préférence compris entre 10° et 20°.

6. Insert de coupe selon l'une quelconque des revendications 1 à 5, **caractérisé en ce que** la surface supérieure et la surface inférieure (11) présentent une région de plateau central (111) réalisée sous forme rehaussée, à laquelle se raccorde un flanc (112) de réalisation concave en tant que région de transition à la surface de coupe (113).

7. Procédé pour l'usinage par enlèvement de copeaux de pièces entraînées en rotation, à savoir de manivelles, dans lequel au moins un insert de coupe est d'abord avancé dans la direction radiale vers la pièce et est ensuite déplacé dans la direction axiale par rapport à la pièce,
**caractérisé en ce**
**qu'**un insert de coupe (18) selon l'une quelconque des revendications 1 à 6 est d'abord déplacé radialement pour la rotation en plan d'un palier central et ensuite est déplacé axialement pour l'usinage de finition d'une base de palier.
